# EUROPÄISCHE PATENTSCHRIFT

(11) **EP 3 088 746 B1**
(45) Veröffentlichungstag und Bekanntmachung des Hinweises auf die Patenterteilung: **11.03.2020**
(21) Anmeldenummer: 15166059.4
(22) Anmeldetag: 30.04.2015
(51) Int. Cl.: F04D 19/04, F04D 29/058, F16C 32/04, F16C 35/00

(54) **VAKUUMPUMPE**
VACUUM PUMP
POMPE À VIDE

(43) Veröffentlichungstag der Anmeldung: 02.11.2016
(73) Patentinhaber: PFEIFFER VACUUM GMBH, 35614 Asslar (DE)
(72) Erfinder: Mädler, Matthias, 35759 Driedorf (DE); Bader, Florian, 35625 Hüttenberg (DE)
(74) Vertreter: Manitz Finsterwald Patent- und Rechtsanwaltspartnerschaft mbB

(56) Entgegenhaltungen:
- EP-A1- 0 413 851
- EP-A2- 0 867 627
- EP-A2- 2 728 194
- WO-A1-2005/121561
- DE-A1- 10 022 061

## Beschreibung

Die vorliegende Erfindung betrifft eine Vakuumpumpe, insbesondere Turbomolekularpumpe, mit einem Stator und einem Rotor mit einer um eine Rotorachse drehbar gelagerten Rotorwelle und mehreren an der Rotorwelle vorgesehenen, jeweils mehrere Rotorschaufeln umfassenden Rotorscheiben, sowie einem die Rotorwelle ansaugseitig abstützenden Permanentmagnetlager, das eine statorseitige Lagerhälfte und eine radial außerhalb der statorseitigen Lagerhälfte angeordnete rotorseitige Lagerhälfte aufweist, die jeweils mehrere in axialer Richtung aufeinanderfolgende Permanentmagnetringe umfassen.

Vakuumpumpen wie z.B. Turbomolekularpumpen werden in unterschiedlichen Bereichen der Technik eingesetzt, um ein für einen jeweiligen Prozess notwendiges Vakuum zu schaffen. Turbomolekularpumpen umfassen einen Stator mit mehreren in Richtung einer Rotorachse aufeinanderfolgenden Statorscheiben, und einen relativ zu dem Stator um die Rotorachse drehbar gelagerten Rotor, der eine Rotorwelle und mehrere auf der Rotorwelle angeordnete, in axialer Richtung aufeinanderfolgende und zwischen den Statorscheiben angeordnete Rotorscheiben umfasst, wobei die Statorscheiben und die Rotorscheiben jeweils eine pumpaktive Struktur aufweisen.

Aus DE 100 22 061 A1 ist eine Turbomolekularpumpe mit einem Magnetlager bekannt, dessen Magnetringe fest in Aufnahmen gehaltert sind.

Es bestehen Bestrebungen, die Betriebsdrehzahl des Rotors von Vakuumpumpen der eingangs genannten Art weiter zu erhöhen. Mit einer solchen Erhöhung der Rotordrehzahl ergibt sich jedoch eine Reihe von Problemen. So stellt der bisher übliche sogenannte Pressverband, durch den die Rotorscheiben, die Rotorwelle und die rotorseitige Lagerhälfte des Permanentmagnetlagers quer zur Rotationsachse bzw. radial gegeneinander verpresst werden, einen der limitierenden Faktoren für eine höhere Rotordrehzahl dar. Indem bei einem solchen Pressverband die Permanentmagnetringe der rotorseitigen Lagerhälfte des Permanentmagnetlagers einen Außendurchmesser besitzen, der etwas größer ist als der Innendurchmesser des in der Regel eine reduzierte Wandstärke aufweisenden benachbarten Endabschnitts der Rotorwelle, und der Außendurchmesser der Rotorwelle etwas größer ist als der Innendurchmesser der einzelnen Rotorscheiben, sind einerseits die Permanentmagnetringe der rotorseitigen Lagerhälfte des Permanentmagnetlagers und die Rotorwelle und andererseits auch die Rotorscheiben und die Rotorwelle gegeneinander verpresst.

Mit zunehmend höheren Rotordrehzahlen ist nun aber bei einem solchen Pressverband nicht mehr sichergestellt, dass die Permanentmagnetringe der rotorseitigen Lagerhälfte in radialer Richtung zusammengehalten werden, so dass es insbesondere zu Tangentialzugspannungen in den rotorseitigen Permanentmagnetringen kommen kann, die nun aber vermieden werden sollen, da sie angesichts des relativ spröden Materials der Magnetringe dazu führen können, dass die Magnetringe Risse bekommen oder auseinanderbrechen.

Abgesehen davon beeinträchtigen die bei höheren Rotordrehzahlen auftretenden entsprechend höheren Zentrifugalkräfte auch den Pressverband zwischen der Rotorwelle und den auf diese aufgepressten Rotorscheiben. Zur Umgehung dieses Problems ist u.a. denkbar, den die Rotorwelle und die Rotorscheiben umfassenden Rotor einstückig aus einem aus Vollmaterial bestehenden Grundkörper zu fertigen. Alternativ könnten auch die Rotorscheiben mit der Rotorwelle des Rotors miteinander verschweißt werden, was in der Regel jedoch aufwendiger ist, zumal die Rotorwelle meistens aus Aluminium besteht und das Aluminiumschweißen nicht unproblematisch ist.

Schließlich werden die Probleme, die durch die mit höheren Rotordrehzahlen erzeugten höheren Zentrifugalkräfte hervorgerufen werden, durch eine solche spannungsfreie Ausbildung zwischen Rotorwelle und Rotorscheibe, wie sie beispielsweise durch einen einstückigen Rotor erreicht wird, nicht überwunden. So entfällt nicht nur der Bandageneffekt einer aufgeschrumpften hochvakuumseitigen Rotorscheibe im Bereich des Permanentmagnetlagers. Mit den mit zunehmender Rotordrehzahl quadratisch ansteigenden Zentrifugalkräften und dem damit einhergehenden reduzierten Halt der am Rotor abgestützten Permanentmagnetringe nehmen auch die mechanischen Spannungen in diesen rotorseitigen Permanentmagnetringen zu, so dass sich die Probleme zu den rotorseitigen Permanentmagnetringen verlagern und die mechanischen Spannungen in diesen Permanentmagnetringen die nächste Begrenzung für eine Erhöhung der Rotordrehzahl darstellen.

So wird bedingt durch die höheren Zentrifugalkräfte das Übermaß der Permanentmagnetringe durch eine radiale Ausdehnung der Rotorwelle schnell aufgezehrt oder kompensiert, was Zugspannungen in den Permanentmagnetringen zur Folge hat, die nun aber in jedem Fall zu vermeiden sind.

Aus WO 2005/121561 A1 ist es bekannt, zumindest den Teil einer Welle einer Turbomolekularpumpe, der ein Permanentmagnetlager umgibt, aus Titan oder einer Titanlegierung herzustellen, um im Betrieb der Pumpe das Permanentmagnetlager in einem Zustand der Kompression zu halten und so eine Rissbildung der das Magnetlager bildenden Permanentmagnetringe zu verhindern.

Der Erfindung liegt die Aufgabe zugrunde, eine Vakuumpumpe, insbesondere Turbomolekularpumpe, der eingangs genannten Art anzugeben, bei der die zuvor erwähnten Probleme beseitigt sind. Dabei soll auf möglichst einfache und zuverlässige Weise insbesondere auch bei höheren Rotordrehzahlen sichergestellt sein, dass in den Permanentmagnetringen der rotorseitigen Lagerhälfte des Permanentmagnetlagers möglichst keine nachteiligen mechanischen Spannungen auftreten.

Die Aufgabe wird erfindungsgemäß durch eine Vakuumpumpe, insbesondere Turbomolekularpumpe, mit den Merkmalen des Anspruchs 1 gelöst. Bevorzugte Ausführungsformen der erfindungsgemäßen Vakuumpumpe ergeben sich aus den Unteransprüchen, der vorliegenden Beschreibung sowie der Zeichnung.

Die erfindungsgemäße Vakuumpumpe, insbesondere Turbomolekularpumpe, umfasst einen Stator und einen Rotor mit einer um eine Rotorachse drehbar gelagerten Rotorwelle und mehreren an der Rotorwelle vorgesehenen, jeweils mehrere Rotorschaufeln umfassenden Rotorscheiben, sowie ein die Rotorwelle ansaugseitig abstützendes Permanentmagnetlager, das eine statorseitige Lagerhälfte und eine radial außerhalb der statorseitigen Lagerhälfte angeordnete rotorseitige Lagerhälfte aufweist, die jeweils mehrere in axialer Richtung aufeinanderfolgende Permanentmagnetringe umfassen. Dabei ist die rotorseitige Lagerhälfte des Permanentmagnetlagers von einer diese in Umfangsrichtung umgebenden Hülse eingefasst, die radial eine festigkeitsmäßige Entkopplung der Permanentmagnetringe der rotorseitigen Lagerhälfte des Permanentmagnetlagers von den diese umgebenden Rotorbestandteilen bewirkt.

Bei den die Hülse umgebenden Rotorbestandteilen handelt es sich insbesondere um die Rotorwelle und/oder die Rotorscheiben.

Aufgrund dieser Ausbildung ist auf einfache und zuverlässige Art und Weise insbesondere auch bei höheren Rotordrehzahlen sichergestellt, dass in den Permanentmagnetringen der rotorseitigen Lagerhälfte des Permanentmagnetlagers keine nachteiligen mechanischen Spannungen auftreten. Die Rotordrehzahl kann nunmehr insbesondere unter Vermeidung der Gefahr einer Rissbildung in den rotorseitigen Permanentmagnetringen oder eines Auseinanderbrechens dieser Permanentmagnetringe deutlich erhöht werden.

Erfindungsgemäß ist die Hülse so ausgeführt, dass sie sich auch während des Betriebs der Vakuumpumpe unabhängig von einer jeweiligen radialen Ausdehnung der umgebenden Rotorbestandteile infolge auftretender Zentrifugalkräfte radial nicht oder zumindest weniger stark als die umgebenden Rotorbestandteile ausdehnt und so die Permanentmagnetlagerringe der rotorseitigen Lagerhälfte des Permanentmagnetlagers zusammenhält. Auch bei höheren Rotordrehzahlen werden somit zuverlässig nachteilige mechanische Spannungen in den rotorseitigen Permanentmagnetringen vermieden.

Erfindungsgemäß besteht die Hülse aus einem Material, das einen kleineren Wärmeausdehnungskoeffizienten und/oder einen höheren E-Modul besitzt als das Material, aus dem die Rotorwelle und/oder die Rotorscheiben des Rotors bestehen.

Dabei besteht die Hülse erfindungsgemäß aus einem Verbundwerkstoff, oder aus einem Material, das einen Verbundwerkstoff enthält.

Gegebenenfalls kann der im Material der Hülse enthaltene Verbundwerkstoff beispielsweise kohlenstofffaserverstärkten Kunststoff oder dergleichen enthalten. Gemäß einer praktischen Ausführungsform der erfindungsgemäßen Vakuumpumpe besitzt die Hülse eine rein zylindrische Form mit einer in axialer Richtung konstanten Wandungsdicke.
Gemäß einer alternativen vorteilhaften Ausführungsform der erfindungsgemäßen Vakuumpumpe kann die Hülse auch einen die rotorseitige Lagerhälfte des Permanentmagnetlagers in Umfangsrichtung umgebenden zylindrischen Abschnitt und einen an einem axialen Ende des zylindrischen Abschnitts vorgesehenen, zur Bildung eines die rotorseitige Lagerhälfte stirnseitig umgreifenden Ringbereichs L-förmig radial nach innen abgewinkelten Bereich umfassen.

Dabei kann der L-förmige radial nach innen abgewinkelte Bereich beispielsweise am ansaugseitigen axialen Ende der Hülse vorgesehen sein. In diesem Fall ist die rotorseitige Lagerhälfte des Permanentmagnetlagers vorteilhafterweise axial zwischen dem L-förmig radial nach innen abgewinkelten Ringbereich der Hülse und der Rotorwelle gehalten.

Alternativ kann der L-förmig radial nach innen abgewinkelte Ringbereich auch am von der Ansaugseite abgewandten axialen Ende der Hülse vorgesehen sein.

Von Vorteil ist insbesondere auch, wenn der jeweilige L-förmig radial nach innen abgewinkelte Ringbereich der Hülse eine größere in axialer Richtung gemessene Dicke besitzt als die in radialer Richtung gemessene Dicke des zylindrischen Abschnitts der Hülse. Durch einen entsprechend dickeren Ringbereich der Hülse kann eine insgesamt noch zuverlässigere Halterung der rotorseitigen Permanentmagnetringe erreicht werden.

Die Hülse ist bevorzugt einstückig ausgeführt. Dies ist aber nicht zwingend. Die Hülse kann auch mehrteilig ausgebildet sein und z.B. mehrere in axialer Richtung aufeinanderfolgende Halteringe umfassen.

Der die Rotorwelle und die Rotorscheiben umfassende Rotor kann beispielsweise einstückig aus einem aus Vollmaterial bestehenden Grundkörper gefertigt sein.

Alternativ ist beispielsweise auch eine solche Ausführung der Vakuumpumpe denkbar, bei der die Rotorscheiben mit der Rotorwelle des Rotors verschweißt sind.

Grundsätzlich ist auch eine Ausführung der Vakuumpumpe denkbar, bei der die Rotorscheiben und die Rotorwelle durch einen Pressverband gegeneinander verpresst sind.

Die Erfindung wird im Folgenden anhand von Ausführungsbeispielen unter Bezugnahme auf die Zeichnung näher erläutert; in dieser zeigen:

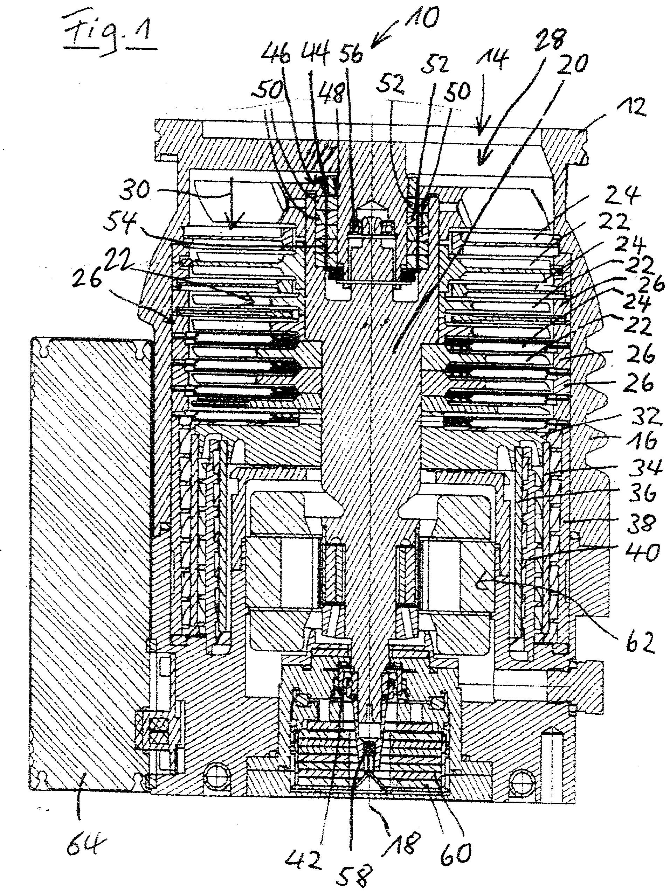

- Fig. 1: eine schematische Darstellung einer beispielhaften Ausführungsform einer Vakuumpumpe, bei der die Erfindung anwendbar ist,

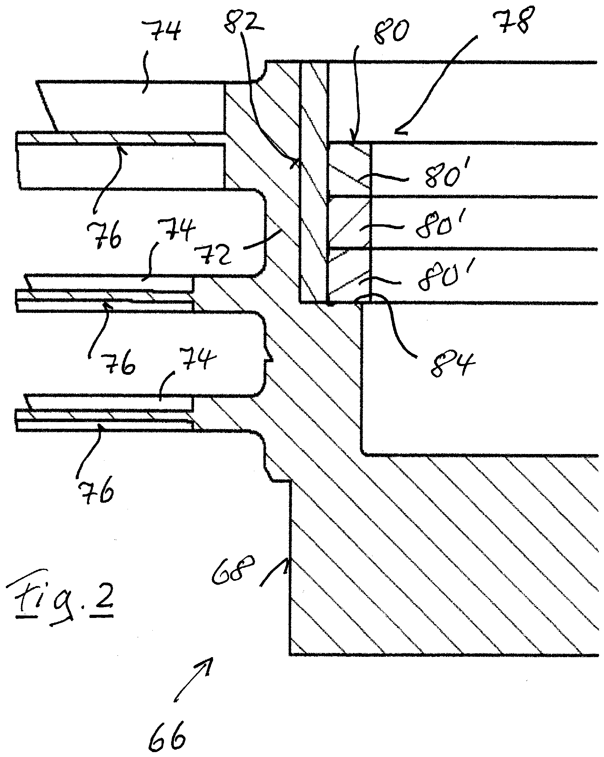

- Fig. 2: eine schematische Teildarstellung einer beispielhaften Ausführungsform einer erfindungsgemäßen Vakuumpumpe, bei der die rotorseitigen Permanentmagnetringen von einer Hülse eingefasst sind, die eine rein zylindrische Form mit einer in axialer Richtung konstanten Wandungsdicke besitzt,

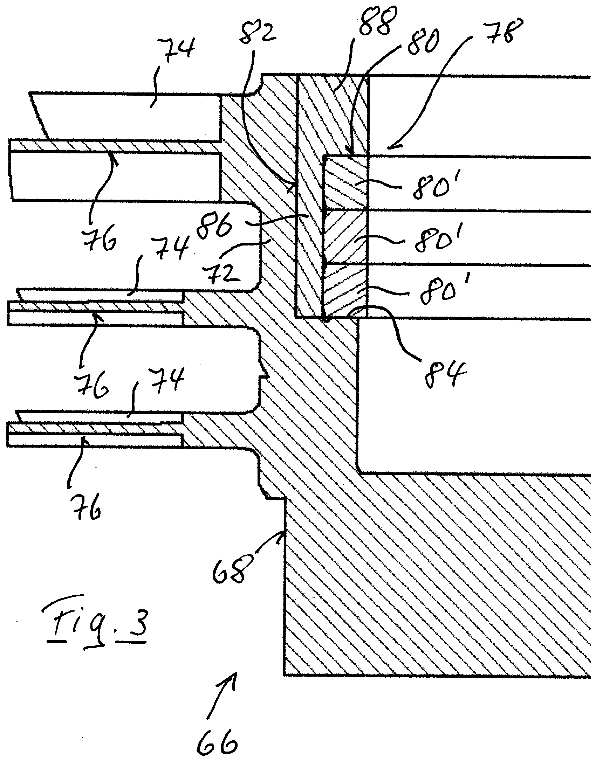

- Fig. 3: eine schematische Teildarstellung einer alternativen beispielhaften Ausführungsform einer erfindungsgemäßen Vakuumpumpe, bei der die Hülse einen zylindrischen Abschnitt und einen am ansaugseitigen axialen Ende der Hülse vorgesehenen L-förmig radial nach innen abgewinkelten Ringbereich umfasst, und

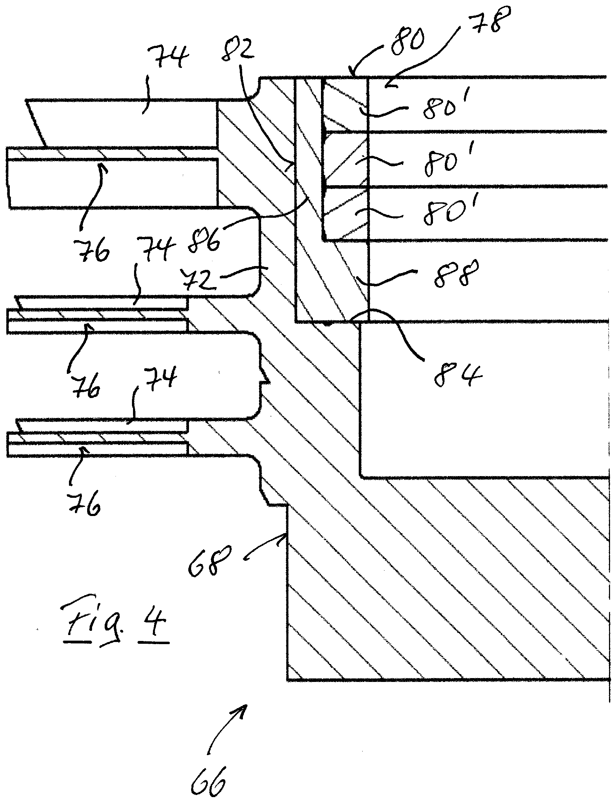

- Fig. 4: eine schematische Teildarstellung einer weiteren alternativen beispielhaften Ausführungsform einer erfindungsgemäßen Vakuumpumpe, bei der die Hülse einen zylindrischen Abschnitt und einen am von der Ansaugseite abgewandten axialen Ende der Hülse vorgesehenen L-förmig radial nach innen abgewinkelten Ringbereich umfasst.

Fig. 1 zeigt in schematischer Darstellung eine beispielhafte Ausführungsform einer Vakuumpumpe 10, bei der die Erfindung anwendbar ist. Die Vakuumpumpe 10 umfasst einen von einem Einlassflansch 12 umgebenen Pumpeneinlass 14 sowie mehrere Pumpstufen zur Förderung des an dem Pumpeneinlass 14 anstehenden Gases zu einem in Fig. 1 nicht dargestellten Pumpenauslass. Die Vakuumpumpe 10 umfasst einen Stator mit einem statischen Gehäuse 16 und einem in dem Gehäuse 16 angeordneten Rotor mit einer um eine Rotationsachse 18 drehbar gelagerten Rotorwelle 20.

Die Vakuumpumpe 10 ist als Turbomolekularpumpe ausgebildet und umfasst mehrere pumpwirksam miteinander in Serie geschaltete turbomolekulare Pumpstufen mit mehreren mit der Rotorwelle 20 verbundenen turbomolekularen Rotorscheiben 22 und mehreren in axialer Richtung zwischen den Rotorscheiben 22 angeordneten und in dem Gehäuse 16 festgelegten turbomolekularen Statorscheiben 24, die durch Distanzringe 26 in einem gewünschten axialen Abstand zueinander gehalten sind. Die Rotorscheiben 22 und Statorscheiben 24 stellen in einem Schöpfbereich 28 eine in Richtung des Pfeils 30 gerichtete axiale Pumpwirkung bereit.

Die Vakuumpumpe 10 umfasst zudem drei in radialer Richtung ineinander angeordnete und pumpwirksam miteinander in Serie geschaltete Holweck-Pumpstufen. Der rotorseitige Teil der Holweck-Pumpstufen umfasst eine mit der Rotorwelle 20 verbundene Rotornabe 32 und zwei an der Rotornabe 32 befestigte und von dieser getragene zylindermantelförmige Holweck-Rotorhülsen 34, 36, die koaxial zu der Rotorachse 18 orientiert und in radialer Richtung ineinander geschachtelt sind. Ferner sind zwei zylindermantelförmige Holweck-Statorhülsen 38, 40 vorgesehen, die ebenfalls koaxial zu der Rotationsachse 18 orientiert und in radialer Richtung ineinander geschachtelt sind. Die pumpaktiven Oberflächen der Holweck-Pumpstufen sind jeweils durch die einander unter Ausbildung eines engen radialen Holweck-Spalts gegenüberliegenden radialen Mantelflächen jeweils einer Holweck-Rotorhülse 34, 36 und einer Holweck-Statorhülse 38, 40 gebildet. Dabei ist jeweils eine der pumpaktiven Oberflächen glatt ausgebildet, im vorliegenden Fall die der Holweck-Rotorhülse 34 bzw. 36, und die gegenüberliegende pumpaktive Oberfläche der Holweck-Statorhülse 38, 40 weist eine Strukturierung mit schraubenlinienförmig um die Rotationsachse 18 herum in axialer Richtung verlaufenden Nuten auf, in denen durch die Rotation des Rotors das Gas vorangetrieben und dadurch gepumpt wird.

Die drehbare Lagerung der Rotorwelle 20 wird durch ein Wälzlager 42 im Bereich des Pumpenauslasses und ein Permanentmagnetlager 44 im Bereich des Pumpeneinlasses 14 bewirkt.

Das Permanentmagnetlager 44 umfasst eine rotorseitige Lagerhälfte 46 und eine statorseitige Lagerhälfte 48, die jeweils einen Ringstapel aus mehreren in axialer Richtung aufeinandergestapelten permanentmagnetischen Ringen 50, 52 umfassen, wobei die Magnetringe 50, 52 unter Ausbildung eines radialen Lagerspalts 54 einander gegenüberliegen.

Innerhalb des Permanentmagnetlagers 44 ist ein Not- oder Fanglager 56 vorgesehen, das als ungeschmiertes Wälzlager ausgebildet ist und im normalen Betrieb der Vakuumpumpe ohne Berührung leer läuft und erst bei einer übermäßigen radialen Auslenkung des Rotors gegenüber dem Stator in Eingriff gelangt, um einen radialen Anschlag für den Rotor zu bilden, der eine Kollision der rotorseitigen Strukturen mit den statorseitigen Strukturen verhindert.

Im Bereich des Wälzlagers 42 ist an der Rotorwelle 20 eine konische Spritzmutter 58 mit einem zu dem Wälzlager 42 hin zunehmenden Außendurchmesser vorgesehen, die mit einem Abstreifer eines mehrere mit einem Betriebsmittel, wie z.B. einem Schmiermittel, getränkte saugfähige Scheiben 60 umfassenden Betriebsmittelspeichers in gleitendem Kontakt steht. Im Betrieb wird das Betriebsmittel durch kapillare Wirkung von dem Betriebsmittelspeicher über den Abstreifer auf die rotierende Spritzmutter 58 übertragen und infolge der Zentrifugalkraft entlang der Spritzmutter 58 in Richtung des größer werdenden Außendurchmessers der Spritzmutter 58 zu dem Wälzlager 42 hin gefördert, wo es z.B. eine schmierende Funktion erfüllt.

Die Vakuumpumpe 10 umfasst einen Antriebsmotor 62 zum drehenden Antreiben des Rotors, dessen Läufer durch die Rotorwelle 20 gebildet ist. Eine Steuereinheit 64 steuert den Antriebsmotor 62 an.

Die turbomolekularen Pumpstufen stellen in dem Schöpfbereich 28 eine Pumpwirkung in Richtung des Pfeils 30 bereit.

Die im Folgenden anhand von Ausführungsbeispielen unter Bezugnahme auf die Fig. 2 bis 4 näher beschriebene Erfindung ist beispielsweise bei einer Vakuumpumpe anwendbar, wie sie anhand der Fig. 1 beschrieben wurde.

Die Fig. 2 bis 4 zeigen in schematischer Darstellung beispielhafte Ausführungsformen einer erfindungsgemäßen Vakuumpumpe 66, bei der es sich jeweils insbesondere wieder um eine Turbomolekularpumpe handeln kann. Die Vakuumpumpe 66 umfasst einen Stator (nicht gezeigt) und einen Rotor 68 mit einer um eine Rotorachse 70 drehbar gelagerten Rotorwelle 72 und mehreren an der Rotorwelle 72 vorgesehenen, jeweils mehrere Rotorschaufeln 74 umfassenden Rotorscheiben 76, sowie ein die Rotorwelle 72 ansaugseitig abstützendes Permanentmagnetlager 78, das eine stationäre Lagerhälfte (nicht gezeigt) und eine radial außerhalb der statorseitigen Lagerhälfte angeordnete rotorseitige Lagerhälfte 80 aufweist, die jeweils mehrere in axialer Richtung aufeinanderfolgende Permanentmagnetringe 80' umfassen.
Dabei ist die rotorseitige Lagerhälfte 80 des Permanentmagnetlagers 78 jeweils von einer diese in Umfangsrichtung umgebenden Hülse 82 eingefasst, die radial eine festigkeitsmäßige Entkopplung der Permanentmagnetringe 80' der rotorseitigen Lagerhälfte 80 des Permanentmagnetlagers 78 von den diese umgebenden Rotorbestandteilen bewirkt, nämlich von einem Abchnitt der Rotorwelle 72 und den Rotorscheiben 76.

Erfindungsgemäß ist die Hülse 82 jeweils so ausgeführt, dass sie sich auch während des Betriebs der Vakuumpumpe 66 unabhängig von einer jeweiligen radialen Ausdehnung der Rotorwelle 72 oder der Rotorscheiben 76 infolge auftretender Zentrifugalkräfte radial allenfalls in einem vernachlässigbaren, unkritischen Maß ausdehnt und so die Permanentmagnetringe 80' zusammenhält.
Die Hülse 82 besteht aus einem Material, das einen kleineren Wärmeausdehnungskoeffizienten und/oder einen höheren E-Modul besitzt als das Material, aus dem die Rotorwelle 72 und/oder die Rotorscheiben 76 des Rotors 68 bestehen. Letztere bestehen beispielsweise aus Aluminium.
Dabei besteht die Hülse 82 aus einem Material, das einen Verbundwerkstoff enthält. Der im Material der Hülse 82 gegebenenfalls enthaltene Verbundwerkstoff kann beispielsweise kohlenstofffaserverstärkten Kunststoff oder dergleichen enthalten.
Fig. 2 zeigt in schematischer Teildarstellung eine beispielhafte Ausführungsform einer erfindungsgemäßen Vakuumpumpe 66, bei der die Hülse 82 eine rein zylindrische Form mit einer in axialer Richtung konstanten Wandungsdicke besitzt. Dabei erstreckt sich die Hülse 82 im vorliegenden Fall axial über die hier beispielsweise drei rotorseitigen Permanentmagnetringe 80' nach oben, d.h. zur Ansaugseite hin hinaus. Auf der gegenüberliegenden Seite stützt sich die Hülse 82 ebenso wie die rotorseitige Lagerhälfte 80 des Permanentmagnetlagers 78 an einem radialen Absatz 84 der Rotorwelle 72 ab.

Die Fig. 3 und 4 zeigen in schematischer Teildarstellung alternative beispielhafte Ausführungsformen einer erfindungsgemäßen Vakuumpumpe 66, bei denen die Hülse 82 jeweils einen die rotorseitige Lagerhälfte 80 des Permanentmagnetlagers 78 in Umfangsrichtung umgebenden zylindrischen Abschnitt 86 und einen an einem axialen Ende des zylindrischen Abschnitts 86 vorgesehenen, zur Bildung eines die rotorseitige Lagerhälfte 80 stirnseitig umgreifenden Ringbereichs 88 L-förmig radial nach innen abgewinkelten Abschnitt umfasst.

Dabei ist der L-förmig radial nach innen abgewinkelte Ringbereich 88 beim in der Fig. 3 dargestellten Ausführungsbeispiel am ansaugseitigen axialen Ende der Hülse 82 vorgesehen. Am gegenüberliegenden axialen Ende stützt sich die Hülse 82 mit ihrem zylindrischen Abschnitt 86 ebenso wie die rotorseitige Lagerhälfte 80 des Permanentmagnetlagers 78 wieder an dem radialen Absatz 84 der Rotorwelle 72 ab. Die rotorseitige Lagerhälfte 80 des Permanentmagnetlagers 78 ist somit axial zwischen dem L-förmig radial nach innen abgewinkelten Innenbereich 88 der Hülse 82 und der Rotorwelle 72 gehalten.

Im Ausführungsbeispiel der Fig. 4 ist der L-förmig radial nach innen abgewinkelte Ringbereich 88 am von der Ansaugseite abgewandten axialen Ende der Hülse 82 vorgesehen. Im vorliegenden Fall stützt sich die Hülse 82 über den L-förmig abgewinkelten Ringbereich 88 an dem radialen Absatz 84 der Rotorwelle 72 ab, während die rotorseitige Lagerhälfte 80 des Permanentmagnetlagers 78 auf dem L-förmig abgewinkelten Ringbereich 88 der Hülse 82 aufliegt. Am ansaugseitigen axialen Ende schließt der zylindrische Abschnitt 86 der Hülse 82 bündig mit der rotorseitigen Lagerhälfte 80 des Permanentmagnetlagers 78 ab. Wie den Fig. 3 und 4 zu entnehmen ist, kann der L-förmig radial nach innen abgewinkelte Ringbereich 88 der Hülse 82 jeweils eine größere in axialer Richtung gemessene Dicke besitzen als die in radialer Richtung gemessene Dicke des zylindrischen Abschnitts 86 der Hülse 82.

Die Hülse 82 ist in den gezeigten Ausführungsbeispielen einstückig ausgeführt.

Der die Rotorwelle 72 und die Rotorscheiben 76 umfassende Rotor 68 kann beispielsweise einstückig aus einem aus Vollmaterial bestehenden Grundkörper gefertigt sein. Es ist jedoch beispielsweise auch eine solche Ausführung der Vakuumpumpe 66 denkbar, bei der die Rotorscheiben 76 mit der Rotorwelle 72 des Rotors 68 verschweißt sind. Alternativ ist beispielsweise auch eine Ausführungsform der Vakuumpumpe 66 denkbar, bei der die Rotorscheiben 76 und die Rotorwelle 72 durch einen Pressverband gegeneinander verpresst sind.

Im Übrigen kann die jeweilige Vakuumpumpe 66 beispielsweise zumindest im Wesentlichen so ausgeführt sein wie die anhand der Fig. 1 beschriebene Vakuumpumpe.

### Bezugszeichenliste

- 10: Vakuumpumpe
- 12: Einlassflansch
- 14: Pumpeneinlass
- 16: Gehäuse
- 18: Rotationsachse
- 20: Rotorwelle
- 22: Rotorscheibe
- 24: Statorscheibe
- 26: Distanzring
- 28: Schöpfbereich
- 30: Pfeil
- 32: Rotornabe
- 34: Holweck-Rotorhülse
- 36: Holweck-Rotorhülse
- 38: Holweck-Statorhülse
- 40: Holweck-Statorhülse
- 42: Wälzlager
- 44: Permanentmagnetlager
- 46: rotorseitige Lagerhälfte
- 48: statorseitige Lagerhälfte
- 50: permanentmagnetischer Ring
- 52: permanentmagnetischer Ring
- 54: radialer Lagerspalt
- 56: Not- oder Fanglager
- 58: konische Spritzmutter
- 60: saugfähige Scheibe
- 62: Antriebsmotor
- 64: Steuereinheit
- 66: Vakuumpumpe
- 68: Rotor
- 70: Rotorachse
- 72: Rotorwelle
- 74: Rotorschaufel
- 76: Rotorscheibe
- 78: Permanentmagnetlager
- 80: rotorseitige Lagerhälfte
- 80': rotorseitige Permanentmagnetringe
- 82: Hülse
- 84: radialer Absatz
- 86: zylindrischer Abschnitt
- 88: abgewinkelter Ringbereich

## Patentansprüche

1. Vakuumpumpe (66), insbesondere Turbomolekularpumpe, mit einem Stator und einem Rotor (68) mit einer um eine Rotorachse (70) drehbar gelagerten Rotorwelle (72) und mehreren an der Rotorwelle (72) vorgesehenen, jeweils mehrere Rotorschaufeln (74) umfassenden Rotorscheiben (76), sowie einem die Rotorwelle (72) ansaugseitig abstützenden Permanentmagnetlager (78), das eine statorseitige Lagerhälfte und eine radial außerhalb der statorseitigen Lagerhälfte angeordnete rotorseitige Lagerhälfte (80) aufweist, die jeweils mehrere in axialer Richtung aufeinanderfolgende Permanentmagnetringe (80') umfassen, wobei die rotorseitige Lagerhälfte (80) des Permanentmagnetlagers (78) von einer diese in Umfangsrichtung umgebenden Hülse (82) eingefasst ist, die radial eine festigkeitsmäßige Entkopplung der Permanentmagnetringe (80') der rotorseitigen Lagerhälfte (80) des Permanentmagnetlagers (78) von den diese umgebenden Rotorbestandteilen (72, 76) bewirkt, wobei die Vakuumpumpe (66) **dadurch gekennzeichnet ist, dass** die Hülse (82) so ausgeführt ist, dass sie sich auch während des Betriebs der Vakuumpumpe (66) unabhängig von einer jeweiligen radialen Ausdehnung der umgebenden Rotorbestandteile (72, 76) infolge auftretender Zentrifugalkräfte radial nicht oder weniger stark als die umgebenden Rotorbestandteile (72, 76) ausdehnt und die Permanentmagnetringe (80') der rotorseitigen Lagerhälfte (80) des Permanentmagnetlagers (78) zusammenhält und
wobei die Hülse (82) aus einem Material besteht, das einen kleineren Wärmeausdehnungskoeffizienten und/oder einen höheren E-Modul besitzt als das Material, aus dem die Rotorwelle (72) und/oder die Rotorscheiben (76) des Rotors (68) bestehen, und
wobei die Hülse (82) aus einem Verbundwerkstoff oder aus einem Material besteht, das einen Verbundwerkstoff enthält.

2. Vakuumpumpe nach Anspruch 1,
**dadurch gekennzeichnet, dass** ein im Material der Hülse (82) enthaltener Verbundwerkstoff kohlenstofffaserverstärkten Kunststoff enthält.

3. Vakuumpumpe nach Anspruch 1 oder 2,
**dadurch gekennzeichnet, dass** die Hülse (82) eine rein zylindrische Form mit einer in axialer Richtung konstanten Wandungsdicke besitzt.

4. Vakuumpumpe nach Anspruch 1 oder 2,
**dadurch gekennzeichnet, dass** die Hülse (28) einen die rotorseitige Lagerhälfte (80) des Permanentmagnetlagers (78) in Umfangsrichtung umgebenden zylindrischen Abschnitt (86) und einen an einem axialen Ende des zylindrischen Abschnitts (86) vorgesehenen, zur Bildung eines die rotorseitige Lagerhälfte (80) stirnseitig umgreifenden Ringbereichs (88) L-förmig radial nach innen abgewinkelten Abschnitt umfasst.

5. Vakuumpumpe nach Anspruch 4,
**dadurch gekennzeichnet, dass** der L-förmig radial nach innen abgewinkelte Ringbereich (88) am ansaugseitigen axialen Ende der Hülse (82) vorgesehen ist.

6. Vakuumpumpe nach Anspruch 5,
**dadurch gekennzeichnet, dass** die rotorseitige Lagerhälfte (80) des Permanentmagnetlagers (78) axial zwischen dem L-förmig radial nach innen abgewinkelten Ringbereich (88) der Hülse (82) und der Rotorwelle (72) gehalten ist.

7. Vakuumpumpe nach Anspruch 4,
**dadurch gekennzeichnet, dass** der L-förmig radial nach innen abgewinkelte Ringbereich (88) am von der Ansaugseite abgewandten axialen Ende der Hülse (82) vorgesehen ist.

8. Vakuumpumpe nach einem der Ansprüche 4 bis 7,
**dadurch gekennzeichnet, dass** der L-förmig radial nach innen abgewinkelte Ringbereich (88) der Hülse (82) eine größere in axialer Richtung gemessene Dicke besitzt als die in radialer Richtung gemessene Dicke des zylindrischen Abschnitts (86) der Hülse (82).

9. Vakuumpumpe nach einem der vorstehenden Ansprüche,
**dadurch gekennzeichnet, dass** die Hülse (82) einstückig ausgeführt ist.

10. Vakuumpumpe nach einem der vorstehenden Ansprüche,
**dadurch gekennzeichnet, dass** der die Rotorwelle (72) und die Rotorscheiben (76) umfassende Rotor (68) einstückig aus einem aus Vollmaterial bestehenden Grundkörper gefertigt ist.

11. Vakuumpumpe nach einem der Ansprüche 1 bis 9,
**dadurch gekennzeichnet, dass** die Rotorscheiben (76) mit der Rotorwelle (72) des Rotors (68) verschweißt sind.

12. Vakuumpumpe nach einem der Ansprüche 1 bis 9,
**dadurch gekennzeichnet, dass** die Rotorscheiben (76) und die Rotorwelle (72) durch einen Pressverband gegeneinander verpresst sind.

## Claims

1. A vacuum pump (66), in particular a turbomolecular pump, comprising a stator; a rotor (68) having a rotor shaft (72) rotatably supported about a rotor axis (70) and having a plurality of rotor disks (76) which are provided at the rotor shaft (72) and which each comprise a plurality of rotor blades (74); and a permanent magnet bearing (78) which supports the rotor shaft (72) at the suction side and which has a stator-side bearing half and a rotor-side bearing half (80) arranged radially outside the stator-side bearing half, said stator-side bearing half and rotor-side bearing half each comprising a plurality of permanent magnet rings (80') following one another in the axial direction,
wherein the rotor-side bearing half (80) of the permanent magnet bearing (78) is encompassed by a sleeve (82) which surrounds it in the peripheral direction and which radially effects a strength-wise decoupling of the permanent magnet rings (80') of the rotor-side bearing half (80) of the permanent magnet bearing (78) from the rotor components (72, 76) surrounding them;
wherein the vacuum pump (66) is **characterized in that** the sleeve (82) is designed such that, also during operation of the vacuum pump (66), it does not expand radially or expands less strongly than the surrounding rotor components (72, 76) and holds together the permanent magnet rings (80') of the rotor-side bearing half (80) of the permanent magnet bearing (78) independently of a respective radial expansion of the surrounding rotor components (72, 76) as a result of occurring centrifugal forces;
wherein the sleeve (82) comprises a material which has a smaller thermal coefficient of expansion and/or a higher modulus of elasticity than the material which the rotor shaft (72) and/or the rotor disks (76) of the rotor (68) comprises/comprise; and
wherein the sleeve (82) comprises a composite material or a material which includes a composite material.

2. A vacuum pump in accordance with claim 1,
**characterized in that** a composite material included in the material of the sleeve (82) includes a carbon fiber reinforced plastic.

3. A vacuum pump in accordance with claim 1 or claim 2,
**characterized in that** the sleeve (82) has a purely cylindrical shape having a wall thickness which is constant in the axial direction.

4. A vacuum pump in accordance with claim 1 or claim 2,
**characterized in that** the sleeve (82) comprises a cylindrical section (86) surrounding the rotor-side bearing half (80) of the permanent magnet bearing (78) in the peripheral direction; and a section which is provided at an axial end of the cylindrical section (86) and which is angled radially inwardly in an L shape to form a ring region (88) which surrounds the rotor-side bearing half (80) at the end face.

5. A vacuum pump in accordance with claim 4,
**characterized in that** the ring region (88) angled radially inwardly in an L shape is provided at an axial end of the sleeve (82) at the suction side.

6. A vacuum pump in accordance with claim 5,
**characterized in that** the rotor-side bearing half (80) of the permanent magnet bearing (78) is held axially between the ring region (88) of the sleeve (82) angled radially inwardly in an L shape and the rotor shaft (72).

7. A vacuum pump in accordance with claim 4,
**characterized in that** the ring region (88) angled radially inwardly in an L shape is provided at an axial end of the sleeve (82) remote from the suction side.

8. A vacuum pump in accordance with any one of the claims 4 to 7,
**characterized in that** the ring region (88) of the sleeve (82) angled radially inwardly in an L shape has a larger thickness measured in the axial direction than the thickness of the cylindrical section (86) of the sleeve (82) measured in the radial direction.

9. A vacuum pump in accordance with any one of the preceding claims,
**characterized in that** the sleeve (82) is designed in one piece.

10. A vacuum pump in accordance with any one of the preceding claims,
**characterized in that** the rotor (68) comprising the rotor shaft (72) and the rotor disks (76) is produced in one piece from a base body comprising a solid material.

11. A vacuum pump in accordance with any one of the claims 1 to 9,
**characterized in that** the rotor disks (76) are welded to the rotor shaft (72) of the rotor (68).

12. A vacuum pump in accordance with any one of the claims 1 to 9,
**characterized in that** the rotor disks (76) and the rotor shaft (72) are pressed toward one another by an interference fit.

## Revendications

1. Pompe à vide (66), en particulier pompe turbomoléculaire, comportant un stator et un rotor (68) pourvu d'un arbre de rotor (72) monté mobile en rotation autour d'un axe de rotor (70) et de plusieurs disques de rotor (76) prévus sur l'arbre de rotor (72) et présentant chacun plusieurs aubes de rotor (74), et un palier à aimant permanent (78) qui supporte l'arbre de rotor (72) du côté admission et qui comporte une moitié de palier côté stator et une moitié de palier (80) côté rotor disposée radialement à l'extérieur de la moitié de palier côté stator, chacune d'entre elles comprenant plusieurs anneaux d'aimant permanent (80') qui se succèdent dans la direction axiale, dans laquelle
la moitié de palier (80) côté rotor du palier à aimant permanent (78) est encadrée d'une douille (82) qui l'entoure dans la direction circonférentielle et qui procure radialement un découplage, en termes de rigidité, des anneaux d'aimant permanent (80') de la moitié de palier (80) côté rotor du palier à aimant permanent par rapport aux composants de rotor (72, 76) qui l'entourent,
la pompe à vide (66) étant **caractérisée en ce que**
la douille (82) est conçue de telle sorte que, même pendant le fonctionnement de la pompe à vide (66), elle ne se dilate pas radialement ou se dilate moins fortement que les composants de rotor voisins (72, 76), indépendamment d'une dilatation radiale respective des composants de rotor voisins (72, 76) due à des forces centrifuges qui se produisent, et maintient ensemble les anneaux d'aimant permanent (80') de la moitié de palier (80) côté rotor du palier à aimant permanent (78), et
la douille (82) est constituée d'un matériau ayant un coefficient de dilatation thermique inférieur et/ou un module d'élasticité supérieur à ceux du matériau dont sont constitués l'arbre de rotor (72) et/ou les disques de rotor (76) du rotor (68), et
la douille (82) est constituée d'un matériau composite ou d'un matériau contenant un matériau composite.

2. Pompe à vide selon la revendication 1,
**caractérisée en ce que**
un matériau composite contenu dans le matériau de la douille (82) contient une matière plastique renforcée de fibres de carbone.

3. Pompe à vide selon la revendication 1 ou 2,
**caractérisée en ce que**
la douille (82) présente une forme purement cylindrique avec une épaisseur de paroi constante en direction axiale.

4. Pompe à vide selon la revendication 1 ou 2,
**caractérisée en ce que**
la douille (82) comprend une portion cylindrique (86) entourant la moitié de palier (80) côté rotor du palier à aimant permanent (78) dans la direction circonférentielle, et une portion prévue à une extrémité axiale de la portion cylindrique (86) et coudée radialement vers l'intérieur en forme de L pour former une zone annulaire (88) qui entoure la moitié de palier (80) côté rotor sur la face frontale.

5. Pompe à vide selon la revendication 4,
**caractérisée en ce que**
la zone annulaire (8) coudée radialement vers l'intérieur en forme de L est prévue à l'extrémité axiale côté admission de la douille (82).

6. Pompe à vide selon la revendication 5,
**caractérisée en ce que**
la moitié de palier (80) côté rotor du palier à aimant permanent (78) est maintenue axialement entre la zone annulaire (88) coudée radialement vers l'intérieur en forme de L de la douille (82) et l'arbre de rotor (72).

7. Pompe à vide selon la revendication 4,
**caractérisée en ce que**
la zone annulaire (88) coudée radialement vers l'intérieur en forme de L est prévue à l'extrémité axiale de la douille (82) détournée du côté admission.

8. Pompe à vide selon l'une des revendications 4 à 7,
**caractérisée en ce que**
la zone annulaire (88) coudée radialement vers l'intérieur en forme de L de la douille (82) présente une épaisseur mesurée en direction axiale qui est supérieure à l'épaisseur mesurée en direction radiale de la portion cylindrique (86) de la douille (82).

9. Pompe à vide selon l'une des revendications précédentes,
**caractérisée en ce que**
la douille (82) est réalisée d'un seul tenant.

10. Pompe à vide selon l'une des revendications précédentes,
**caractérisée en ce que**
le rotor (68) comprenant l'arbre de rotor (72) et les disques de rotor (76) est fabriqué d'un seul tenant à partir d'un corps de base constitué en matériau massif.

11. Pompe à vide selon l'une des revendications 1 à 9,
**caractérisée en ce que**
les disques de rotor (76) sont assemblés par soudage avec l'arbre de rotor (72) du rotor (68).

12. Pompe à vide selon l'une des revendications 1 à 9,
**caractérisée en ce que**
les disques de rotor (76) et l'arbre de rotor (72) sont pressés les uns contre les autres par un ajustement serré.
